# FASCICULE DE BREVET EUROPEEN

(11) **EP 3 451 870 B1**
(45) Date de publication et mention de la délivrance du brevet: **27.05.2020**
(21) Numéro de dépôt: 17737536.7
(22) Date de dépôt: 04.07.2017
(51) Int. Cl.: A45D 40/00, B05B 1/16, B05B 11/00, G01F 23/02

(54) **DISPOSITIF POUR LE CONDITIONNEMENT ET LA DISTRIBUTION D'UN PRODUIT, NOTAMMENT D'UN PRODUIT COSMÉTIQUE**
VORRICHTUNG ZUR VERPACKUNG UND AUSGABE EINES PRODUKTS, INSBESONDERE EIN KOSMETIKPRODUKT
DEVICE FOR PACKAGING AND DISPENSING A PRODUCT, NOTABLY A COSMETIC PRODUCT

(30) Priorité: 06.07.2016 FR 1656461
(43) Date de publication de la demande: 13.03.2019
(73) Titulaire: Galderma Research & Development, 06410 Biot (FR)
(72) Inventeur: YAN, Jian, Kirkland, Quebec H9J 3B4 (CA)
(74) Mandataire: Nederlandsch Octrooibureau
(86) Numéro de dépôt international: PCT/EP2017/066595
(87) Numéro de publication internationale: WO 2018/007366

(56) Documents cités:
- EP-A1- 2 995 571
- WO-A1-89/11445
- US-A1- 2012 267 398

## Description

La présente invention concerne un dispositif de conditionnement et de distribution d'un produit.

Le dispositif est particulièrement adapté à la distribution de produits cosmétiques, pharmaceutiques ou dermato-pharmaceutiques. De tels produits peuvent par exemple être distribués sous forme d'un lait, d'une crème, d'un gel, d'une mousse, etc.

Les produits du type de ceux précités sont couramment stockés dans un récipient réalisé notamment en matériau thermoplastique ou en verre. Le récipient de stockage est équipé d'une tête de distribution fixée sur le col du récipient et comprenant un bouton-poussoir mobile de manière à permettre de délivrer une dose de produit. Un tel récipient est connu du document EP 2 995 571 A.

Les récipients de stockage du type utilisant un compartiment à volume variable et équipé d'une pompe sans reprise d'air, généralement appelée « pompe airless », sont largement utilisés dans le domaine de la cosmétique. De tels récipients sont avantageux dans la mesure où le produit à distribuer est conditionné et stocké en étant isolé de l'air.

Le bouton-poussoir prévu sur de tels récipients de stockage est pourvu d'un orifice de sortie en communication avec la pompe pour délivrer une dose de produit en réponse à un actionnement de cette pompe. Cet actionnement est obtenu en exerçant une pression sur le bouton-poussoir. Pour plus de détails sur la conception de tels récipients de stockage, on pourra par exemple se référer à la demande de brevet EP-A1-2 353 727 (Rieke Corporation).

De sorte qu'un utilisateur puisse actionner la pompe et collecter le produit distribué avec la même main, il est connu de concevoir le bouton-poussoir sous forme d'une coupelle, par exemple concave.

Cependant, une telle conception ne permet pas de garantir un dosage précis de produit à chaque utilisation. En effet, la quantité de produit distribué dépend principalement de la zone du bouton-poussoir sur laquelle l'utilisateur exerce une pression. En outre, si l'utilisateur recouvre partiellement l'orifice de sortie lorsqu'il exerce cette pression, il peut se produire une projection non contrôlée du produit distribué.

La présente invention vise à remédier à ces inconvénients.

Plus particulièrement, la présente invention vise à prévoir un dispositif de conditionnement et de distribution permettant de contrôler précisément la quantité de produit distribué à chaque utilisation.

La présente invention vise également à prévoir un dispositif présentant un confort d'utilisation amélioré.

L'invention a pour objet un dispositif de conditionnement et de distribution d'un produit, notamment d'un produit cosmétique, comprenant un récipient pourvu d'au moins un compartiment à volume variable contenant ledit produit, et une tête de distribution comprenant une embase de montage fixée sur le récipient.

La tête de distribution comprend en outre un piston interne mobile en translation selon un axe de déplacement et délimitant à l'intérieur de ladite embase des première et deuxième chambres de pompage, au moins des premier et deuxième orifices d'entrée pour mettre respectivement en communication les première et deuxième chambres de pompage avec le compartiment du récipient, et au moins des premier et deuxième clapets d'admission obturant respectivement de manière étanche les premier et deuxième orifices d'entrée.

La tête de distribution comprend encore au moins une tige d'actionnement s'étendant à travers les chambres de pompage et le piston et s'étendant en saillie de part et d'autre de l'embase de montage. Ladite tige délimite intérieurement un premier canal d'amenée en communication avec un premier orifice de sortie de la tête de distribution et un deuxième canal d'amenée séparé dudit premier canal et en communication avec un deuxième orifice de sortie de ladite tête. Au moins des premier et deuxième orifices traversants sont ménagés sur la tige d'actionnement et débouchent respectivement dans lesdits premier et deuxième canaux d'amenée.

Selon une caractéristique générale, la tige d'actionnement est mobile axialement et pourvue de moyens de butée aptes à autoriser un coulissement de ladite tige relativement audit piston entre une première position extrême et une deuxième position extrême.

Dans la première position extrême, le premier orifice traversant est obstrué par le piston et le deuxième orifice traversant met en communication le deuxième canal d'amenée. Dans la deuxième position extrême, ledit premier orifice met en communication le premier canal d'amenée avec la première chambre de pompage et ledit deuxième orifice est obstrué par le piston.

On entend par « la tige d'actionnement est mobile axialement», un déplacement de cette tige selon une direction axiale en considérant l'axe de déplacement du piston. La tige d'actionnement peut par exemple se déplacer le long d'un axe confondu avec cet axe de déplacement. En variante, l'axe de déplacement de la tige peut être parallèle à l'axe de déplacement du piston. L'axe de déplacement du piston forme un angle non nul avec un axe longitudinal du récipient de stockage. De préférence, l'axe de déplacement du piston est orthogonal audit axe longitudinal.

Par « un deuxième canal d'amenée séparé dudit premier canal», il convient d'entendre que le deuxième canal d'amenée n'est pas en communication fluidique à l'intérieur de la tige avec le premier canal d'amenée.

La distribution de produit peut être obtenue en déplaçant manuellement la tige selon un premier sens d'actionnement ou selon un second sens d'actionnement opposé. La tige, le piston et l'embase de montage forment une pompe sans reprise d'air à double sens d'actionnement.

Etant donné que la tige et le piston sont actionnables selon deux sens opposés, il n'est pas nécessaire de prévoir de moyens de rappel en position, par exemple pour obtenir un retour automatique du moyen d'actionnement et une aspiration du produit contenu dans le récipient de stockage comme cela est le cas dans les dispositifs de distribution conventionnels.

En outre, la quantité de produit distribué peut aisément être contrôlée et modifiée à chaque utilisation selon la course de déplacement de la tige d'actionnement. Par ailleurs, la conception particulière du dispositif empêche d'utiliser la même main pour commander la distribution du produit et le collecter.

Les clapets d'admission sont de préférence portés par l'embase de montage. Chaque clapet d'admission et l'orifice d'entrée associé forment une valve unidirectionnelle permettant l'admission de produit, initialement contenu dans le compartiment du récipient de stockage, dans la chambre de pompage en communication avec ledit orifice.

Lorsqu'une surpression règne dans cette chambre, le clapet d'admission reste en appui étanche sur un siège de l'embase de montage, tandis qu'une dépression dans ladite chambre provoque le décollement du clapet d'admission de son siège permettant l'aspiration du produit.

Dans un mode de réalisation avantageux, chaque clapet d'admission est réalisé au moins en partie en matériau déformable élastiquement. Une telle conception permet d'éviter l'utilisation de billes. Pour conférer plus de souplesse aux clapets d'admission, ceux-ci peuvent être pourvus d'un ou plusieurs évidements, par exemple réalisés sous la forme de fentes ou orifices, et/ou présenter localement une épaisseur réduite.

L'embase de montage peut comprendre des premier et deuxième flasques d'obturation opposés délimitant les première et deuxième chambres de pompage. Dans un mode de réalisation particulier, les clapets d'admission sont portés respectivement par les premier et deuxième flasques d'obturation.

Avantageusement, chaque flasque d'obturation peut également comprendre une bague d'étanchéité annulaire coopérant de manière étanche avec la tige d'actionnement. De préférence, la bague d'étanchéité de chaque flasque d'obturation est venue de matière avec le clapet d'admission dudit flasque. Alternativement, il est cependant possible de prévoir un clapet d'admission disposé sur le flasque sans être relié à d'autres moyens rapportés sur ce flasque.

Avantageusement, la tête de distribution peut comprendre en outre des premier et deuxième boutons-poussoirs solidaires de la tige d'actionnement. Dans un mode de réalisation particulier, ces boutons-poussoirs sont équipés respectivement des premier et deuxième orifices de sortie du produit.

Chaque bouton-poussoir permet ainsi à l'utilisateur soit de commander une distribution de produit au travers de l'autre bouton-poussoir, soit de recueillir le produit distribué. De sorte à favoriser l'ergonomie et la collecte du produit, chaque bouton-poussoir peut présenter une forme de coupelle concave. En variante, il est cependant possible de prévoir d'autres formes pour les boutons-poussoirs.

Avantageusement, le dispositif selon l'invention peut être utilisé pour le conditionnement et la distribution d'un produit cosmétique, ou dermatologique, notamment sous forme d'une crème, d'une mousse, d'un gel ou d'un lait.

La présente invention sera mieux comprise à l'étude de la description détaillée d'un mode de réalisation, pris à titre d'exemple nullement limitatif et illustré par les dessins annexés, sur lesquels :
- la figure 1 est une vue en coupe d'un dispositif de conditionnement et de distribution selon un exemple de réalisation de l'invention,
- la figure 2 est une vue partielle de la figure 1,
- la figure 3 est une vue en coupe selon l'axe III-III de la figure 2, et

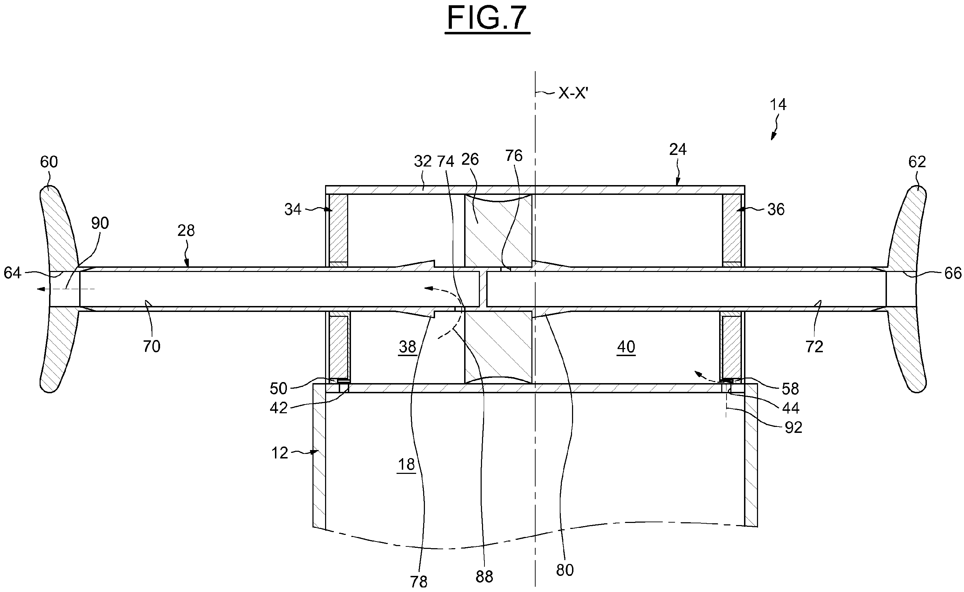

- les figures 4 à 7 sont des vues partielles en coupe du dispositif de la figure 1 selon différentes positions d'utilisation.

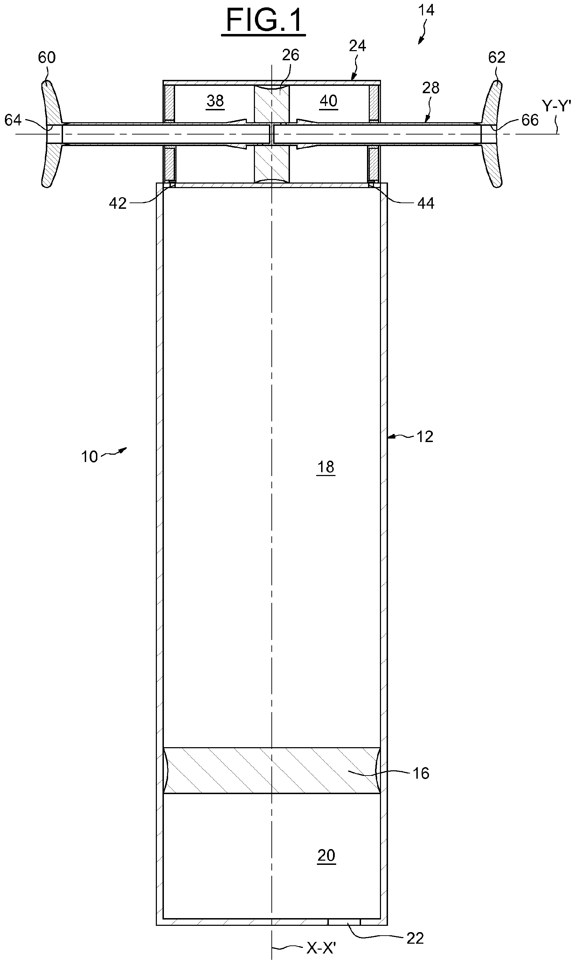

Sur la figure 1 est illustré un dispositif, désigné par la référence numérique générale 10, qui comprend un récipient 12 de stockage d'un produit (non représenté) et une tête 14 de distribution dudit produit montée sur le récipient. Le dispositif 10 est représenté dans une position supposée verticale.

Le récipient 12 s'étend selon un axe X-X' longitudinal, ici vertical. Le récipient 12 comprend une extrémité inférieure formant fond et une extrémité opposée ouverte sur laquelle est fixée la tête 14 de distribution par tout moyen approprié, par exemple par vissage ou par claquage.

Le récipient 12 comprend un piston 16 qui est monté à l'intérieur de celui-ci de manière étanche en étant mobile librement dans le sens axial. Le piston 16 délimite à l'intérieur du récipient 12 un compartiment 18 à volume variable qui contient le produit.

Dans l'exemple de réalisation illustré, le piston 16 délimite également à l'intérieur du récipient 12 un compartiment 20 additionnel, également à volume variable, et qui est à la pression atmosphérique par l'intermédiaire d'un orifice 22 d'entrée d'air ménagé ici sur le fond du récipient. Alternativement, il pourrait être possible de prévoir un récipient 12 dont le fond est constitué par le piston 16 et serait ainsi dépourvu d'orifice de reprise d'air. Au fur et à mesure de la distribution du produit contenu dans le compartiment 18, le piston 16 remonte à l'intérieur du récipient 12 sous l'effet de la dépression résultant de la diminution du volume de produit. Le récipient 12 et le piston 16 sont réalisés chacun en une pièce, par exemple par moulage d'une matière thermoplastique, par exemple en polypropylène (PP) ou en polyéthylène (PE).

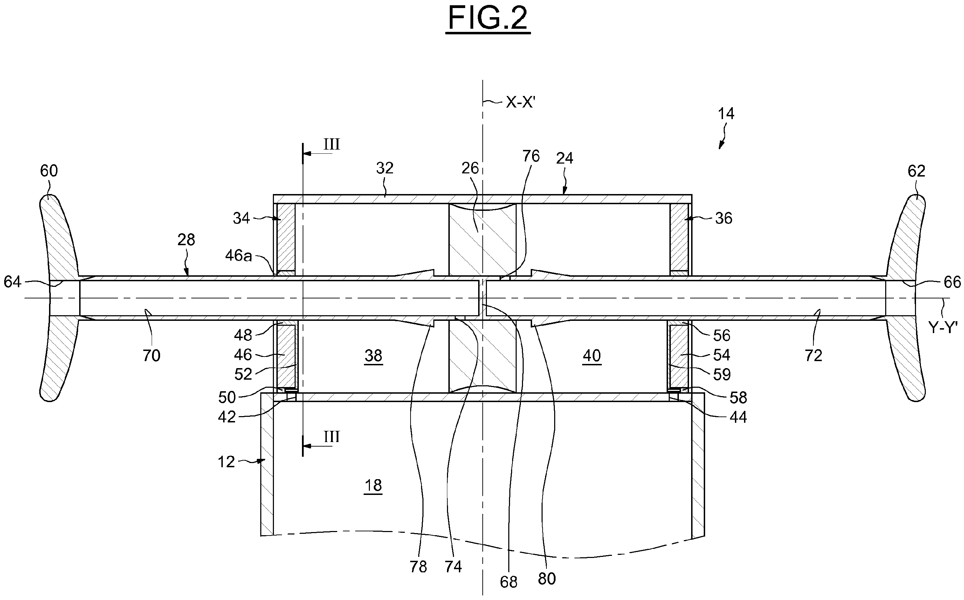

Comme illustré plus visiblement à la figure 2, la tête 14 de distribution, coaxiale à l'axe X-X', comprend une embase 24 de montage sur le récipient 12, un piston 26 interne monté à l'intérieur de ladite embase, et une tige 28 d'actionnement montée mobile par rapport à l'embase et au piston et permettant d'obtenir une distribution de produit comme cela sera décrit plus en détail par la suite.

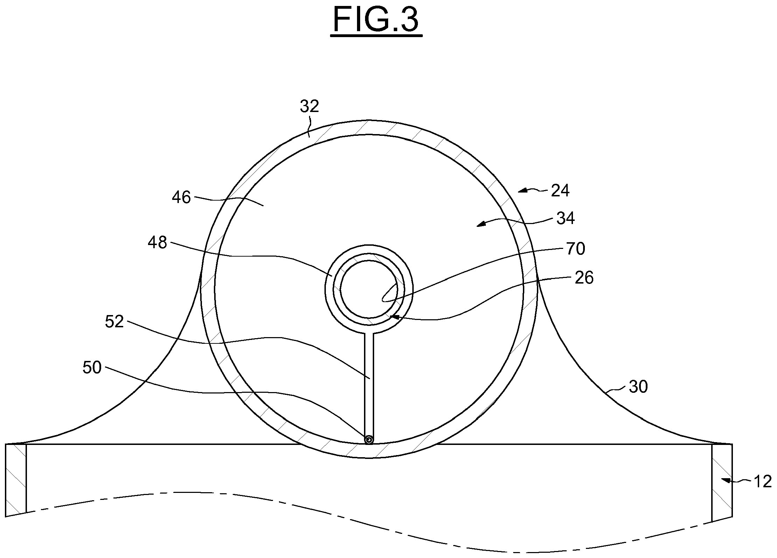

L'embase 24 assure une double fonction, à savoir assurer le montage de la tête 14 de distribution sur le récipient 12 et supporter le piston 26 et la tige 28. L'embase 24 de montage comprend un corps 30 (figure 3) pour le montage sur le récipient 12, et un tube 32 de distribution à l'intérieur duquel est monté le piston 26. L'embase 24 de montage comprend également deux flasques 34, 36 d'obturation disposés chacun à une des extrémités du tube 32. Chaque flasque est fixé sur le tube 32 par tout moyen approprié, par exemple par collage.

La section droite du piston 26 correspond précisément à la section interne du tube 32. Dans l'exemple de réalisation illustré, la section du piston 26 est de forme circulaire. En variante, d'autres formes peuvent être prévues. Le corps 30 et le tube 32 sont réalisés en une seule pièce, par exemple par moulage d'une matière thermoplastique notamment en PP ou en polytéréphtalate de butylène (PBT). Le piston 26 peut également être réalisé par moulage d'une matière thermoplastique, par exemple en PE.

Le piston 26 est monté libre à l'intérieur de l'embase 24 de montage de manière étanche. Le piston 26 est monté mobile à l'intérieur de l'embase 24 selon un axe Y-Y', qui est ici orthogonal à l'axe X-X' du récipient 12. L'axe Y-Y' est ici horizontal. Le piston 26 délimite à l'intérieur de l'embase 24 de montage des première et deuxième chambres de pompage 38, 40. Plus précisément, la première chambre de pompage 38 est délimitée par le tube 32, le flasque 34 d'obturation et le piston 26 tandis que la deuxième chambre de pompage 40 est délimitée par le tube, le piston et le flasque 36 d'obturation.

La tête 14 de distribution comprend un premier orifice 42 d'entrée pour mettre en communication fluidique la première chambre de pompage 38 et le compartiment 18 du récipient, et un deuxième orifice 44 d'entrée pour mettre en communication fluidique ce compartiment et la deuxième chambre de pompage 40. L'orifice 42, respectivement 44, débouche dans la première chambre de pompage 38, respectivement 40, et dans le compartiment 18. Les orifices 42, 44 d'entrée sont ménagés ici dans l'épaisseur de l'embase 24 de montage, plus précisément dans l'épaisseur du tube 32. Les orifices 42, 44 d'entrée sont disposés de part et d'autre du piston 26.

Dans l'exemple de réalisation illustré, chaque flasque 34, 36 d'obturation réalise une triple fonction, à savoir obturer le tube 32, supporter de manière étanche la tige 28 d'actionnement et réaliser l'obturation de l'orifice 42, 44 d'entrée associé. Les flasques 34, 36 d'obturation étant ici identiques, on décrira uniquement l'un d'entre eux en détail en référence aux figures 2 et 3.

Le flasque 34 comprend un corps 44 principal en concordance de forme avec l'alésage du tube 32 de l'embase de montage et pourvu d'un alésage 46a pour le passage de la tige 28. Le flasque 34 comprend également une bague 48 d'étanchéité recouvrant ledit alésage et venant en appui contre la tige 28 pour assurer son montage étanche, un clapet 50 d'admission obstruant l'orifice 42 d'entrée et une portion de jonction 52 reliant le clapet à la bague. Le clapet 50 et l'orifice 42 forment une valve unidirectionnelle pour permettre l'admission à l'intérieur de la chambre de pompage 38 du produit contenu dans le compartiment 18 du récipient de stockage. Dans l'exemple de réalisation illustré, le clapet 50 d'admission se présente sous la forme d'un plot cylindrique. Le clapet 50 est ici évidé en partie de sorte à lui conférer plus de souplesse. La portion de jonction 52 se présente sous la forme d'une bande de faible épaisseur.

La bague 48, le clapet 50 et la portion de jonction 52 du flasque sont réalisés en une seule pièce dans un matériau élastiquement déformable, par exemple en élastomère ou en élastomère thermoplastique (TPE). Le corps 44 est réalisé en matière rigide, par exemple en thermoplastique notamment en PP. Le flasque 34 d'obturation peut par exemple être obtenu par bi-injection. De façon identique, le flasque 36 d'obturation comprend un corps 54 principal, une bague 56 d'étanchéité, un clapet 58 d'admission et une portion de jonction 59.

La tête 14 de distribution comprend encore des premier et deuxième boutons-poussoirs 60, 62 montés chacun à une extrémité de la tige 28 d'actionnement, ici par emmanchement. Dans l'exemple de réalisation illustré, chaque bouton-poussoir 60, 62 se présente sous la forme d'une coupelle de forme concave. Un orifice 64, 66 de sortie est ménagé sur chaque bouton-poussoir 60, 62. Les orifices 64, 66 forment les orifices de sortie de la tête de distribution 14. Chaque orifice 64, 66 est ici coaxial à l'axe Y-Y'. Les boutons-poussoirs 60, 62 peuvent avantageusement être réalisés par moulage d'une matière thermoplastique, par exemple en PP.

La tige 28 d'actionnement est montée mobile en translation par rapport à l'embase 24 de montage et au piston 26 le long de l'axe Y-Y' de déplacement dudit piston. L'axe de déplacement de la tige est ici confondu avec l'axe Y-Y'. La tige 28 s'étend à travers les chambres de pompage 38, 40, le piston 26 et les flasques 34, 36. La tige 28 s'étend en saillie de part et d'autre de l'embase 24 de montage. La tige 28 est rectiligne. Chaque bouton-poussoir 60, 62 est monté sur une des parties d'extrémité en saillie de la tige 28. Dans l'exemple de réalisation illustré, la tige 28 d'actionnement est également mobile en rotation autour de l'axe Y-Y'. Alternativement, cette possibilité de rotation de la tige 28 pourrait être supprimée.

La tige 28 d'actionnement, de forme creuse, est pourvue intérieurement d'une cloison 68 de séparation qui délimite de part et d'autre des premiers et deuxièmes canaux 70, 72 d'amenée. Aucune communication fluidique directe n'existe entre les canaux 70, 72. Chaque canal 70, 72 s'étend de la cloison 68 jusqu'à une des extrémités libres de la tige 28. Dans l'exemple de réalisation illustré, la cloison 68 est située sensiblement au milieu de la tige 28. En variante, il est possible de prévoir une autre disposition de cette paroi. Le premier canal 70 d'amenée est en communication fluidique avec l'orifice 64 de sortie du premier bouton-poussoir 60 tandis que le deuxième canal 72 est en communication avec l'orifice 66 de sortie du deuxième bouton-poussoir 60.

La tige 28 d'actionnement comprend également des premier et deuxième orifices 74, 76 traversants ménagés à partir de la surface extérieure de ladite tige et débouchant respectivement dans les premiers et deuxièmes canaux 70, 72 d'amenée. Les orifices 74, 76 sont donc disposés de part et d'autre de la cloison 68. L'espacement entre les orifices 74, 76 est inférieur à l'épaisseur du piston 26 de sorte à pouvoir être obstrués simultanément par ledit piston comme cela est illustré dans la position de la figure 2.

Des première et deuxième protubérances 78, 80 sont également prévues sur la surface extérieure de la tige 28 et s'étendent en saillie vers l'extérieur par rapport à ladite surface. Les protubérances 78, 80 sont solidaires de la tige 28. Les protubérances 78, 80 sont disposées de part et d'autre du piston 26. La protubérance 78, respectivement 80, est située dans la chambre de pompage 38, respectivement 40, de l'embase de montage.

Dans l'exemple de réalisation illustré, chaque protubérance 78, 80 est de forme annulaire et présente en section droite une forme triangulaire. En variante, ces protubérances peuvent présenter en section droite un autre profil, par exemple carré, rectangulaire, en cercle, etc. Alternativement ou en combinaison, il est également possible de prévoir des protubérances non continues dans le sens circonférentiel.

Les protubérances 78, 80 forment des moyens de butée aptes à limiter le déplacement de la tige 28 d'actionnement relativement au piston 26. La tige 28 est mobile par rapport au piston 26 entre une première position extrême dans laquelle la protubérance 78 vient en appui contre une première face du piston 26, et une deuxième position extrême dans laquelle la protubérance 80 est en appui contre une deuxième face opposée dudit piston 26. Le déplacement relatif de la tige 28 et du piston 26 est autorisé uniquement entre les première et deuxième positions extrêmes.

La tige 28 est avantageusement réalisée en une seule pièce par moulage d'une matière thermoplastique, par exemple en PP ou en polyoxyméthylène (POM). En variante, il est possible de prévoir des protubérances 78, 80 rapportées sur la tige.

Pour procéder à la distribution du produit contenu dans le compartiment 18 du récipient, l'utilisateur procède de la manière suivante.

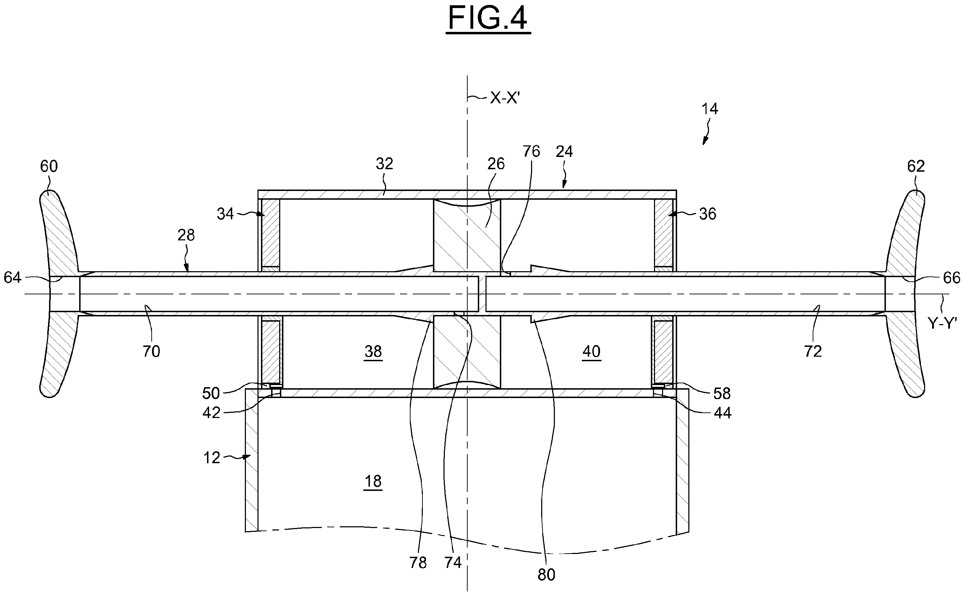

À partir de la position illustrée à la figure 2, si l'utilisateur appuie sur le bouton-poussoir 60, la tige 28 d'actionnement coulisse axialement, en considérant l'axe Y-Y', relativement au piston 26 jusqu'à ce que la protubérance 78 vienne en appui contre celui-ci comme illustré à la figure 4. Dans cette position, seul le premier orifice 74 traversant est obstrué par le piston 26, le deuxième orifice 76 traversant étant laissé libre par ledit piston et étant en communication avec la deuxième chambre de pompage 40. L'orifice 76 est laissé entièrement libre par le piston 26 dans cette position. Ceci favorise l'obtention d'un débit stable. En variante, le piston 26 pourrait recouvrir encore partiellement l'orifice 76.

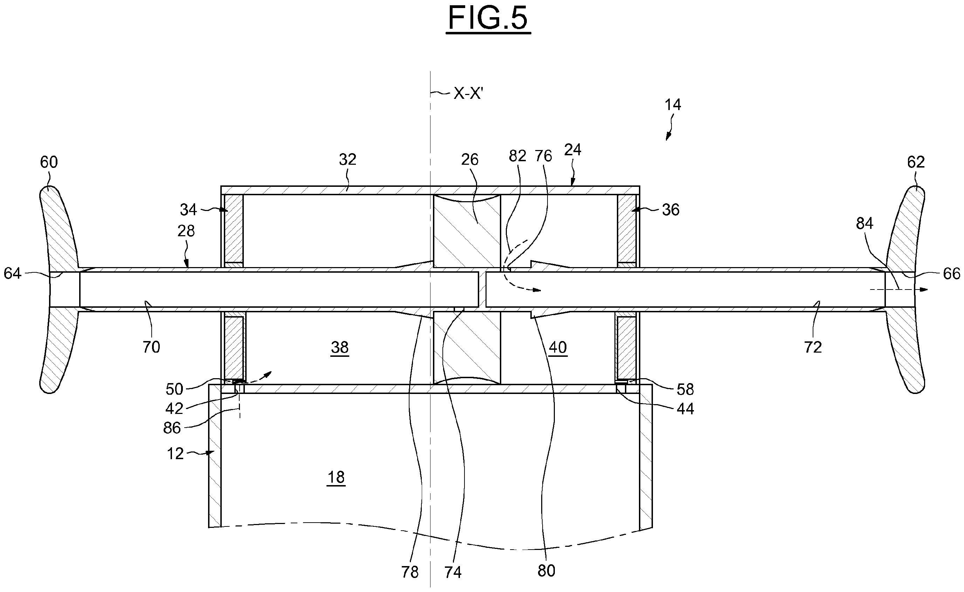

Ensuite, sous l'effet de la pression exercée par l'utilisateur sur le bouton-poussoir 60, le piston 26 et la tige 28 coulissent axialement conjointement en direction du flasque 36, ce qui provoque une diminution du volume de la deuxième chambre de pompage 40 comme cela est visible à la figure 5.

Une partie du produit présent dans cette chambre de pompage 40 est forcée à travers le deuxième orifice 76 comme illustré schématiquement par la flèche référencée 82. Ceci provoque un déplacement du produit contenu dans le deuxième canal d'amenée 72, et une sortie dudit produit au travers de l'orifice 66 du bouton-poussoir 62 qui est illustrée schématiquement par la flèche référencée 84. La surpression, qui est créée par le déplacement du piston 26 et régnant à l'intérieur de la chambre de pompage 40, maintient le clapet d'admission 58 en position fermée, i.e. en position obturant l'orifice d'entrée 44.

Simultanément à la diminution du volume de la deuxième chambre de pompage 40 provoquée par le déplacement du piston 26, il se produit une augmentation du volume de la première chambre de pompage 38. Ceci provoque la création d'une dépression à l'intérieur de cette chambre de pompage 38 qui est suffisante pour obtenir une ouverture du clapet d'admission 50 et une aspiration du produit contenu dans le compartiment 18 du récipient au travers de l'orifice d'entrée 42 qui est illustrée schématiquement par la flèche référencée 86. Ceci provoque une remontée du piston suiveur à l'intérieur du récipient de stockage.

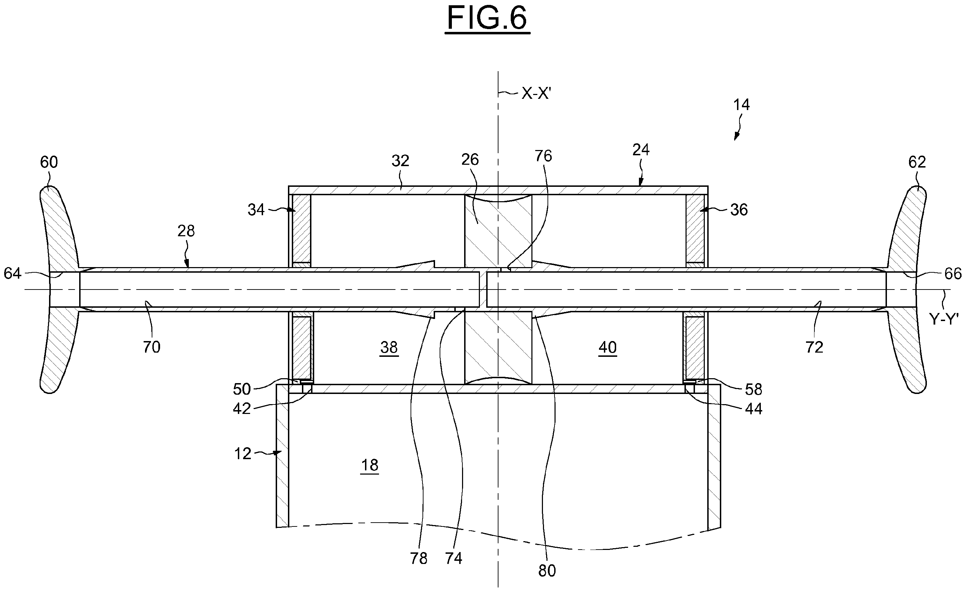

À partir de la position illustrée à la figure 2, si l'utilisateur appuie sur le bouton-poussoir 62 et non sur le bouton-poussoir 60, le fonctionnement de la tête de distribution est inversé. La tige 28 coulisse par rapport au piston 26 jusqu'à ce que la protubérance 80 vienne en appui contre celui-ci comme illustré à la figure 6.

Dans cette position, seul le deuxième orifice 76 traversant est obstrué par le piston 26, le premier orifice 74 traversant étant laissé libre par ledit piston et étant en communication avec la première chambre de pompage 38. Ensuite, sous l'effet de la pression exercée sur le bouton-poussoir 62 par l'utilisateur, le piston 26 et la tige 28 coulissent conjointement en direction du flasque 34, ce qui provoque une diminution du volume de la première chambre de pompage 38 et une augmentation du volume de la deuxième chambre de pompage 40 comme cela est visible à la figure 8.

Une partie du produit présent dans la chambre de pompage 38 est forcée à travers le premier orifice 74 comme illustré schématiquement par la flèche référencée 88. Ceci provoque un déplacement du produit contenu dans le premier canal d'amenée 70, et une sortie dudit produit au travers de l'orifice 64 du bouton-poussoir 60 qui est illustrée schématiquement par la flèche référencée 90.

Simultanément, avec l'augmentation du volume de la deuxième chambre de pompage 40, une dépression est créée à l'intérieur de cette chambre, ce qui provoque une ouverture du clapet d'admission 58 et une aspiration du produit contenu dans le compartiment 18 du récipient vers cette chambre de pompage 40 au travers de l'orifice d'entrée 44 qui est illustrée schématiquement par la flèche référencée 92. Ceci provoque une remontée du piston suiveur à l'intérieur du récipient de stockage. A l'inverse, la surpression régnant à l'intérieur de la chambre de pompage 38 maintient le clapet d'admission 50 en position fermé.

Lorsque le dispositif n'a pas encore été utilisé et que les chambres de pompage 38, 40 et les canaux d'amenée 70, 72 de la tige d'actionnement sont vides, il suffit de quelques pressions successives sur les boutons-poussoirs 60, 62 pour les remplir. Le dispositif peut aisément être manipulé par l'utilisateur en saisissant le récipient 12 dans une main, en appuyant sur l'un des boutons-poussoirs 60, 62 avec le pouce de cette main, et en recueillant avec l'autre main le produit distribué au travers de l'orifice de sortie de l'autre bouton-poussoir.

Grâce à l'invention, on dispose d'un dispositif présentant une nouvelle gestuelle d'utilisation dans la mesure où la distribution de produit peut être obtenue par déplacement de la tige 28 d'actionnement selon deux sens opposés.

En outre, le dispositif permet de s'affranchir de l'utilisation d'un moyen de rappel, tel qu'un ressort, comme cela est le cas dans les dispositifs conventionnels pour obtenir un retour du moyen d'actionnement en position initiale et une aspiration du produit contenu dans le récipient de stockage.

Avec le dispositif de l'invention, lorsqu'une partie du produit contenu dans l'une des chambres pompage 38, 40 est aspiré à travers l'orifice traversant associé de la tige 28 pour obtenir une distribution de produit, il se produit simultanément une aspiration du produit contenu dans le récipient 12 de stockage vers l'autre chambre de pompage. Le déplacement de la tige 28 et du piston 26 provoque cette double aspiration pour obtenir à la fois une sortie de produit de l'une des chambres de pompage 38, 40 et une entrée de produit dans l'autre chambre.

Par ailleurs, la quantité de produit distribué à chaque utilisation peut être aisément contrôlée par l'utilisateur. De sorte que l'utilisateur puisse repérer la position du piston 26 à l'intérieur de l'embase 24 de montage et commander de façon encore plus précise son coulissement, cette embase peut être réalisée en un matériau transparent ou translucide permettant la visualisation du piston. Dans ce but, il est également possible de prévoir en outre sur l'embase 24 des graduations ou repères pour repérer la position du piston 26, et d'assurer ainsi la sortie d'une dose de produit bien précise et reproductible.

Dans l'exemple de réalisation illustré sur les figures, le récipient comprend un piston suiveur se déplaçant au fur et à mesure pour réduire le volume du compartiment contenant le produit à distribuer. Alternativement, il est possible de prévoir un récipient comprenant une poche à paroi souple qui délimite le compartiment à volume variable.

Dans l'exemple de réalisation illustré, les orifices de sortie de la tête de distribution sont ménagés sur les boutons-poussoirs. En variante, il pourrait être possible de prévoir une autre disposition des orifices de sortie. Par exemple, la tige peut être fermée à chaque extrémité et ces orifices peuvent être ménagés dans l'épaisseur de celle-ci de sorte à obtenir une distribution de produit selon une direction orthogonale à l'axe de déplacement de la tige.

## Revendications

1. Dispositif de conditionnement et de distribution d'un produit, notamment d'un produit cosmétique, comprenant un récipient (12) pourvu d'au moins un compartiment (18) à volume variable contenant ledit produit, et une tête de distribution (14) comprenant :
- une embase (24) de montage fixée sur le récipient,
- un piston (26) interne mobile en translation selon un axe de déplacement (Y-Y') et délimitant à l'intérieur de ladite embase des première et deuxième chambres de pompage (38, 40),
- au moins des premier et deuxième orifices d'entrée (42, 44) pour mettre respectivement en communication les première et deuxième chambres de pompage avec le compartiment du récipient, et au moins des premier et deuxième clapets d'admission (50, 58) obturant respectivement de manière étanche les premier et deuxième orifices d'entrée (42, 44), **caractérisé en ce que** la tête de distribution comprend en outre:
- au moins une tige (28) d'actionnement s'étendant à travers les chambres de pompage et le piston et s'étendant en saillie de part et d'autre de l'embase de montage, ladite tige délimitant intérieurement un premier canal d'amenée (70) en communication avec un premier orifice de sortie (64) de la tête de distribution et un deuxième canal d'amenée (72) séparé dudit premier canal et en communication avec un deuxième orifice de sortie (66) de ladite tête, et
- au moins des premier et deuxième orifices traversants (74, 76) ménagés sur la tige d'actionnement et débouchant respectivement dans lesdits premier et deuxième canaux d'amenée,
- dans lequel la tige (28) d'actionnement est mobile axialement et pourvue de moyens de butée (78, 80) aptes à autoriser un coulissement de ladite tige relativement audit piston entre une première position extrême dans laquelle le premier orifice traversant (74) est obstrué par le piston et le deuxième orifice traversant (76) met en communication le deuxième canal d'amenée (72) avec la deuxième chambre de pompage (40), et une deuxième position extrême dans laquelle ledit premier orifice met en communication le premier canal d'amenée (70) avec la première chambre de pompage (38) et ledit deuxième orifice est obstrué par le piston.

2. Dispositif selon la revendication 1, dans lequel l'axe de déplacement du piston (26) est orthogonal à un axe longitudinal du récipient (12) de stockage.

3. Dispositif selon la revendication 1 ou 2, dans lequel la tête de distribution (14) comprend en outre des premier et deuxième boutons-poussoirs (60, 62) solidaires de la tige d'actionnement et équipés respectivement des premier et deuxième orifices de sortie (64, 66).

4. Dispositif selon la revendication 3, dans lequel chaque bouton-poussoir présente une forme concave.

5. Dispositif selon l'une quelconque des revendications précédentes, dans lequel chaque clapet d'admission (50, 58) est configuré de sorte à fermer l'orifice d'entrée (42, 44) associé de façon étanche en l'absence de dépression à l'intérieur de la chambre de pompage associée audit orifice d'entrée.

6. Dispositif selon l'une quelconque des revendications précédentes, dans lequel chaque clapet d'admission (50, 58) est réalisé au moins en partie en matériau déformable élastiquement.

7. Dispositif selon l'une quelconque des revendications précédentes, dans lequel lesdits clapets d'admission (50, 58) sont portés par l'embase (24) de montage.

8. Dispositif selon l'une quelconque des revendications précédentes, dans lequel l'embase (24) de montage comprend des premier et deuxième flasques d'obturation (34, 36) opposés délimitant les première et deuxième chambres de pompage (38, 40).

9. Dispositif selon la revendication 8, dans lequel les premier et deuxième clapets d'admission (50, 58) sont portés respectivement par les premier et deuxième flasques d'obturation (34, 36).

10. Dispositif selon la revendication 8 ou 9, dans lequel chaque flasque d'obturation (34, 36) comprend une bague d'étanchéité (48, 56) annulaire coopérant de manière étanche avec la tige (28) d'actionnement.

11. Dispositif selon la revendication 10, dans lequel la bague d'étanchéité (48, 56) de chaque flasque d'obturation est venue de matière avec le clapet d'admission (50, 58) dudit flasque.

12. Dispositif selon l'une quelconque des revendications précédentes, dans lequel l'embase (24) de montage est réalisée en un matériau transparent ou translucide permettant la visualisation du piston (26).

13. Dispositif selon la revendication 12, dans lequel l'embase (24) de montage comprend eu outre des graduations ou repères pour repérer la position du piston (26) à l'intérieur de ladite embase.

14. Dispositif selon l'une quelconque des revendications précédentes, dans lequel le récipient (12) comprend un piston suiveur (16) mobile à l'intérieur dudit récipient et délimitant de manière étanche le compartiment (18).

15. Dispositif selon l'une quelconque des revendications précédentes, dans lequel le récipient (12) comprend au moins un orifice d'entrée (22) pour autoriser une entrée d'air à l'intérieur dudit récipient et à l'extérieur du compartiment (18) au fur et à mesure que le produit est pompé à l'intérieur de ce dernier.

## Patentansprüche

1. Vorrichtung zur Verpackung und Verteilung eines Produkts, vor allem eines kosmetischen Produkts, die einen Behälter (12) umfasst, der mit mindestens einer Kammer (18) mit variablem Volumen versehen ist, die besagtes Produkt enthält, und einem Verteilerkopf (14), der Folgendes umfasst:
- einen Montagesockel (24), der auf dem Behälter befestigt ist,
- einen Innenkolben (26), der gemäß einer Bewegungsachse (Y-Y') translationsbeweglich ist und in besagtem Sockel die erste und die zweite Pumpkammer (38, 40) abgrenzt,
- mindestens erste und zweite Eingangsöffnungen (42, 44), um die erste und die zweite Pumpkammer mit der Kammer des Behälters zu verbinden, und mindestens erste und zweite Einlassklappen (50, 58) die die erste bzw. die zweite Eingangsöffnung (42, 44) abdichten, **gekennzeichnet dadurch, dass** der Verteilerkopf außerdem Folgendes umfasst:
- mindestens einen Antriebsschaft (28), der sich durch die Pumpkammern und den Kolben erstreckt und auf beiden Seiten des Montagesockels übersteht, wobei besagter Schaft innen einen ersten Zuführkanal (70) abgrenzt, der in Verbindung mit einer ersten Ausgangsöffnung (64) des Verteilerkopfes steht, und einen zweiten Zuführkanal (72), der von besagtem ersten Kanal getrennt ist und in Verbindung mit einer zweiten Ausgangsöffnung (66) des besagten Kopfes steht, und
- mindestens erste und zweite Durchgangslöcher (74, 576) auf dem Antriebsschaft, die in den ersten bzw. zweiten Zuführkanal münden,
- wobei der Antriebsschaft (28) axial beweglich und mit Anschlagmitteln (78, 80) versehen ist, die geeignet sind, ein Gleiten des besagten Schafts in Bezug auf besagten Kolben zwischen einer ersten extremen Position zu gestatten, in der das erste Durchgangsloch (74) von dem Kolben verschlossen ist und das zweite Durchgangsloch (76) den zweiten Zuführkanal (72) mit der zweiten Pumpkammer (40) in Verbindung setzt, und einer zweiten extremen Position, in der besagtes erste Loch seinen ersten Zuführkanal (70) mit der ersten Pumpkammer (38) verbindet und besagte zweite Öffnung von dem Kolben verschlossen wird.

2. Vorrichtung nach Anspruch 1, wobei die Bewegungsachse des Kolbens (26) orthogonal zu einer Längsachse des Lagerbehälters (12) ist.

3. Vorrichtung nach Anspruch 1 oder 2, wobei der Verteilerkopf (14) außerdem erste und zweite Druckknöpfe (60, 62) umfasst, die mit dem Antriebsschaft verbunden und mit ersten bzw. zweiten Ausgangsöffnungen (64, 66) ausgestattet sind.

4. Vorrichtung nach Anspruch 3, wobei jeder Druckknopf eine konkave Form aufweist.

5. Vorrichtung nach einem der vorherigen Ansprüche, wobei jede Einlassklappe (50, 58) gestaltet ist, um die dazugehörige Eingangsöffnung (42, 44) abzudichten, falls in der Pumpkammer kein Unterdruck vorhanden ist, die mit der gesagten Eingangsöffnung verbunden ist.

6. Vorrichtung nach einem der vorherigen Ansprüche, wobei jede Einlassklappe (50, 58) mindestens zum Teil aus elastisch verformbarem Material besteht.

7. Vorrichtung nach einem beliebigen der vorherigen Ansprüche, wobei besagte Einlassklappen (50, 58) von dem Montagesockel (24) getragen werden.

8. Vorrichtung nach einem der vorherigen Ansprüche, wobei der Montagesockel (24) erste und zweite gegenüberliegende Verschlussflansche (34, 36) umfasst, die die erste und die zweite Pumpkammer (38, 40) abgrenzen.

9. Vorrichtung nach Anspruch 8, wobei die erste und die zweite Einlassklappe (50, 58) von dem ersten bzw. zweiten Verschlussflansch (34, 36) getragen werden.

10. Vorrichtung nach Anspruch 8 oder 9, wobei jeder Verschlussflansch (34, 36) einen ringförmigen Dichtungsring (48, 56) umfasst, der auf undurchlässige Art mit dem Antriebsschaft (28) zusammenwirkt.

11. Vorrichtung nach Anspruch 10, wobei der Dichtungsring (48, 56) jedes Verschlussflansches einstückig mit der Einlassklappe (50, 58) des besagten Flansches ist.

12. Vorrichtung nach einem der vorherigen Ansprüche, wobei der Montagesockel (24) aus einem durchsichtigen oder durchscheinenden Material hergestellt ist, wodurch der Kolben (26) sichtbar wird.

13. Vorrichtung nach Anspruch 12, wobei der Montagesockel (24) außerdem Markierungen oder Orientierungspunkte umfasst, um die Position des Kolbens (26) in besagtem Sockel aufzufinden.

14. Vorrichtung nach einem der vorherigen Ansprüche, wobei der Behälter (12) einen Nachlaufkolben (16) umfasst, der innerhalb des besagten Behälters beweglich ist und die Kammer (18) abdichtet.

15. Vorrichtung nach einem der vorherigen Ansprüche, wobei der Behälter (12) mindestens eine Eingangsöffnung (22) umfasst, um einen Lufteinlass in den besagten Behälter und in das Äußere der Kammer (18) zu gestatten, während das Produkt in letztere gepumpt wird.

## Claims

1. Device for packaging and dispensing a product, notably a cosmetic product, comprising a container (12) provided with at least one variable volume compartment (18) containing said product, and a dispensing head (14) comprising:
- a mounting base (24) fixed to the container,
- an internal piston (26) movable in translation along a displacement axis (Y-Y') and delimiting first and second pumping chambers (38, 40) inside said base,
- at least first and second inlet holes (42, 44) for communicating respectively the first and second pumping chambers with the container compartment, and at least first and second inlet valves (50, 58) respectively closing the first and second inlet holes (42, 44) in a leak-tight manner, **characterized in that** the dispensing head further comprises:
- at least one actuating rod (28) extending through the pumping chambers and the piston and extending while protruding on either side of the mounting base, said rod internally delimiting a first inlet channel (70) in communication with a first outlet hole (64) of the dispensing head and a second inlet channel (72) separate from said first channel and in communication with a second outlet hole (66) of said head, and
- at least first and second through holes (74, 76) formed on the actuating rod and respectively opening out in said first and second inlet channels,
- wherein the actuating rod (28) is axially movable and provided with stopping means (78, 80) capable of allowing said rod to slide relative to said piston between a first end position in which the first through hole (74) is obstructed by the piston and the second through hole (76) connects the second supply channel (72) with the second pumping chamber (40), and a second end position in which said first hole connects the first supply channel (70) with the first pumping chamber (38) and said second hole is blocked by the piston.

2. Device according to claim 1, in which the displacement axis of the piston (26) is orthogonal to a longitudinal axis of the storage container (12).

3. Device according to claim 1 or 2, wherein the dispensing head (14) further comprises first and second push buttons (60, 62) attached to the actuating rod and equipped respectively with the first and second outlet holes (64, 66).

4. Device according to claim 3, wherein each push button has a concave shape.

5. Device according to any of the preceding claims, wherein each inlet valve (50, 58) is configured so as to close the associated inlet hole (42, 44) in a leak-tight manner in the absence of a vacuum inside the pumping chamber associated with said inlet hole.

6. Device according to any of the preceding claims, wherein each inlet valve (50, 58) is at least partially made of an elastically deformable material.

7. Device according to any of the preceding claims, wherein said inlet valves (50, 58) are carried by the mounting base (24).

8. Device according to any of the preceding claims, wherein the mounting base (24) comprises opposite first and second obturation flanges (34, 36) delimiting the first and second pumping chambers (38, 40).

9. Device according to claim 8, wherein the first and second inlet valves (50, 58) are carried respectively by the first and second obturation flanges (34, 36).

10. Device according to claim 8 or 9, wherein each obturation flange (34, 36) comprises an annular sealing ring (48, 56) which cooperates in a leak-tight manner with the actuating rod (28).

11. Device according to claim 10, wherein the sealing ring (48, 56) of each obturation flange is made integral with the inlet valve (50, 58) of said flange.

12. Device according to any of the preceding claims, wherein the mounting base (24) is made of a transparent or translucent material allowing the piston (26) to be seen.

13. Device according to claim 12, wherein the mounting base (24) further comprises graduations or marks for identifying the position of the piston (26) inside said base.

14. Device according to any of the preceding claims, wherein the container (12) comprises a follower piston (16) movable inside said container and delimiting the compartment (18) in a leak-tight manner.

15. Device according to any of the preceding claims, wherein the container (12) comprises at least one inlet hole (22) to allow air to enter inside said container and outside the compartment (18) as the product is pumped inside the latter.
